# EUROPEAN PATENT APPLICATION

(11) **EP 4 827 132 A1**
(43) Date of publication of application: **21.10.2026**
(21) Application number: 26151403.8
(22) Date of filing: 12.01.2026
(51) Int. Cl.: H04W 4/80, G06N 3/02, H04M 1/72454, H04M 1/72469

(54) **INTERACTION METHOD AND APPARATUS, TERMINAL, SYSTEM AND STORAGE MEDIUM**

(30) Priority: 15.04.2025 CN 202510474886
(71) Applicant: Xiaomi EV Technology Co., Ltd., Beijing 100176 (CN); Beijing Xiaomi Mobile Software Co., Ltd., Beijing 100085 (CN); Beijing Xiaomi Pinecone Electronics Co., Ltd., Beijing 100085 (CN)
(72) Inventor: JIANG, Junjie, 100085 Beijing (CN)
(74) Representative: Hersina, Günter

(57) **Abstract**

The invention provides an interaction method, an interaction apparatus, a terminal, a system and a storage medium, which relates to a field of information processing technologies. The method includes: obtaining a first user instruction, in which the first user instruction includes first operation information; and obtaining information to be identified of a first application in a first terminal, to determine a target operation instruction associated with the information to be identified and the first operation information, in which the target operation instruction is used to trigger a second application of a second terminal to perform a target task, and the first terminal and the second terminal establish a network connection through a device identifier. The invention achieves instruction sharing between the first terminal and the second terminal and optimizes the user experience in an instruction sharing scenario.

## Description

### TECHNICAL FIELD

The present invention relates to a field of information processing technologies, and in particular to an interaction method and apparatus, a terminal, a system and a storage medium.

### BACKGROUND

Currently, information sharing in an interaction procedure is widely used in fields such as driving, smart home or the like. However, in the related art, information sharing through interaction has a problem of complex user operations, which reduces the user experience.

### SUMMARY

The invention is set out in the appended set of claims.

According to the interaction method, the interaction apparatus, the electronic device, the chip and the storage medium proposed in the invention, the information to be identified and the first user instruction are collected by the first terminal, the target operation instruction is determined and shared to the second terminal through a network connection. Then, the target operation instruction is executed on the second terminal, which achieves instruction sharing between the first terminal and the second terminal and optimizes the user experience in an instruction sharing scenario. Compared with the information sharing solutions in the related art, the invention does not require users to input complex instructions, but only basic operation information. The information to be identified is extracted via a predetermined model, to supplement and improve the first operation information in the first user instruction, and to obtain an accurate target operation instruction. The target operation instruction may accurately represent intentions of the users, simplify the user operations, and improve the convenience of the user issuing instructions. The invention is suitable for the instruction sharing scenarios such as a smart driving scenario and a smart home scenario.

Additional aspects and advantages of the present invention will be given in part in the description below, and in part will become apparent from the description below, or will be learned through practice of the present invention.

### BRIEF DESCRIPTION OF THE DRAWINGS

The above and/or additional aspects and advantages of the present invention will become apparent and easily understood from the following description of the embodiments in conjunction with the accompanying drawings.
FIG. 1 is a flowchart illustrating an interaction method according to an embodiment of the invention.
FIG. 2 is a flowchart illustrating an interaction method according to an embodiment of the invention.
FIG. 3 is a flowchart illustrating an interaction method according to an embodiment of the invention.
FIG. 4 is a structure diagram illustrating an interaction apparatus according to an embodiment of the invention.
FIG. 5 is a structure diagram illustrating an interaction apparatus according to an embodiment of the invention.
FIG. 6 is a structure diagram illustrating an interaction apparatus according to an embodiment of the invention.
FIG. 7 is a structure diagram illustrating an electronic device according to an embodiment of the invention.

### DETAILED DESCRIPTION

Embodiments of the present invention are described in detail below, examples of which are shown in the accompanying drawings, throughout which same or similar reference numerals represent same or similar elements or elements with same or similar functions. The embodiments described below with reference to the accompanying drawings are exemplary and are intended to be used to explain the present invention, but can not be understood as limiting the invention.

The following describes the interaction method, the interaction apparatus, the electronic device, the chip and the storage medium in the embodiments of the present invention with reference to the accompanying drawings.

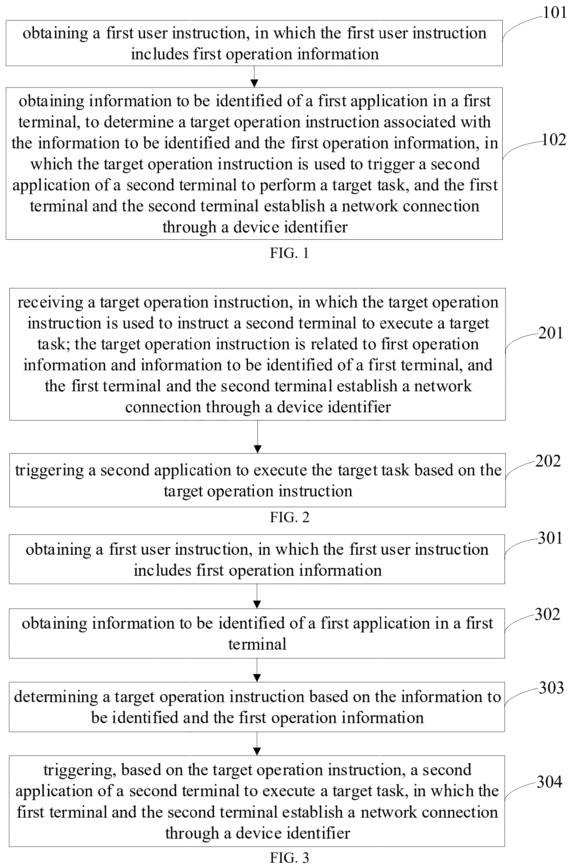

FIG. 1 is a flowchart illustrating an interaction method according to an embodiment of the invention.

As an implementation, the interaction method in the embodiment of the present invention may be configured in an interaction apparatus, and the interaction apparatus may be applied to any electronic device so that the electronic device may perform an interaction function.

The electronic device may be any device with a computing capability, such as a mobile terminal. The mobile terminal may be, for example, a mobile phone, a tablet computer, a personal digital assistant, a wearable device, a vehicle and other hardware devices with various operating systems, a touch screen and/or a display screen.

As shown in FIG. 1, the method may include the following steps 101-102.

At 101, a first user instruction is obtained, in which the first user instruction includes first operation information.

At 102, information to be identified of a first application in a first terminal is obtained to determine a target operation instruction associated with the information to be identified and the first operation information. The target operation instruction is used to trigger a second application of a second terminal to execute a target task. The first terminal and the second terminal establish a network connection through a device identifier.

In this embodiment, the method is executed by the first terminal, which is a terminal that provides the information to be identified. In a scenario of instruction intercommunication, the first terminal is used to determine the target operation instruction and share it with the second terminal, and the second terminal executes the target operation instruction.

Before determining the target operation instruction, the first terminal needs to obtain the first user instruction input by the user and obtain the information to be identified of the first application in the first terminal, and determine the target operation instruction based on the information to be identified and the first user instruction.

In an embodiment, the first operation information included in the first user instruction represents an operation that the user wants to perform. The user indicates a specific operation action to the first terminal through the first user instruction, but the exact operation object is not known from the perspective of the terminal. In order to obtain the exact operation object, this embodiment obtains information to be identified from the first application running in the first terminal. The information to be identified includes information related to the operation object. The identification is performed based on the information to be identified in combination with the first operation information to determine the target operation instruction. The target operation instruction contains the exact operation action and the exact operation object.

In a possible embodiment, the first terminal is a mobile terminal, such as a mobile phone, a tablet computer, a laptop computer, an augmented reality (AR) device, a virtual reality (VR) device, or the like.

In a possible embodiment, the second terminal includes a mobile phone, a smart watch, a vehicle, etc.

In a possible embodiment, in a navigation scenario, the user sees a restaurant in the first application (such as a social application) in the first terminal and wants to navigate to the restaurant. The user issues/makes a voice instruction or command, such as "I want to go to this restaurant". The first terminal obtains the first user instruction. The first operation information contained in the first user instruction indicates a user intention to navigate, but no specific restaurant to be navigated to has been determined. Then, by identifying the information to be identified in the first application of the first terminal, such as picture information of a current application interface, text information of the current application interface, or positioning data of the current application interface, a specific address of the restaurant (such as No. X, XX Road) is obtained. By combining the above voice instruction and the information to be identified, it may be obtained that the user needs to navigate to this restaurant at this time and share navigation information with the second terminal. As such, information interaction is quickly and conveniently achieved in a smart cockpit scenario, without a need to manually input an address into the second terminal (such as a central control screen of a vehicle), thus greatly improving the efficiency of multi-terminal interaction and enhancing the user experience.

In a possible embodiment, in a call scenario, the user sees a phone number in the first application (such as an address book or a recruitment application) in the first terminal and wants to make a call. The user issues a voice instruction such as "I want to contact the person in the picture". The first operation information contained in the first user instruction indicates a user intention to make a call, but no specific phone number to be called has been determined. Then, by identifying the information to be identified (such as a screenshot) in the first application of the first terminal, such as picture information of a current interface and text information of the current interface, specific contact information (such as the phone number 139XXXXXXXX) of the person is determined. By combining the above voice instruction and the information to be identified, it may be obtained that the user needs to call this person at this time and share the phone number with the second terminal. As such, information interaction is quickly and conveniently achieved in a smart cockpit scenario, without a need to manually input a phone number into the second terminal (such as a central control screen of a vehicle), thus greatly improving the efficiency of multi-terminal interaction and enhancing the user experience.

In a possible embodiment, there is no strict order for the above steps 101 and 102. The step 101 may be performed first, then the step 102 is performed, or both the steps 101 and 102 may be performed simultaneously.

Optionally, the first terminal and the second terminal are connected via communication means.

Optionally, the communication means includes short-distance communication and/or long-distance communication. The short-distance communications include Bluetooth, Zigbee, etc., while the long-distance communications include cellular networks, wireless fidelity (WIFI), etc. Optionally, the first terminal and the second terminal may establish a connection directly through the short-distance communication, or may establish a connection through the short-distance communication and/or the long-distance communication under the same user account, so that the instructions may be shared quickly.

The first terminal collects the information to be identified and the first user instruction, determines the target operation instruction and shares it with the second terminal through the network connection. The target operation instruction is executed on the second terminal, which achieves instruction sharing between the first terminal and the second terminal and optimizes the user experience in the instruction sharing scenario. Compared with the information sharing solutions in the related art, the invention does not require users to input complex instructions, but only basic operation information. The information to be identified is extracted via a predetermined model to supplement and improve the first operation information in the first user instruction, and to obtain an accurate target operation instruction. The target operation instruction may accurately represent intentions of the users, simplify the user operations, and improve the convenience of the user issuing instructions. The invention is suitable for the instruction sharing scenarios such as a smart driving scenario and a smart home scenario.

Optionally, the method further includes:
determining, based on the information to be identified and the first operation information, the target operation instruction associated with the information to be identified and the first operation information.

In this embodiment, the first operation information includes an exact operation action and an inexact operation object, and the information to be identified includes an exact operation object. In order to obtain an instruction that may be executed by the second terminal, the information to be identified and the first operation information are identified to extract the exact operation object from the information to be identified. The target operation instruction is generated based on the exact operation object and the exact operation action. Such target operation instruction is the instruction that may be executed by the terminal.

In a possible embodiment, in a navigation scenario, the user sees a restaurant in the first application (such as a social application) in the first terminal and wants to navigate to the restaurant. The user issues/makes a voice instruction or command, such as "I want to go to this restaurant". The first terminal obtains the first user instruction. The first operation information contained in the first user instruction indicates a user intention to navigate, but no specific restaurant to be navigated to has been determined. Then, by identifying the information to be identified in the first application of the first terminal, such as picture information of a current application interface, text information of the current application interface, or positioning data of the current application interface, a specific address of the restaurant (such as No. X, XX Road) is obtained. By combining the above first operation information and the information to be identified, it may be obtained that the user needs to navigate to this restaurant at this time, and it is further determined that the target operation instruction is such as "navigate to No. X, Road XX". By combining the information to be identified and the first operation information to generate the target operation instruction, the terminal may obtain the instruction that the user wants to execute but is not specified in the first operation information. The user does not need to further input more complex instructions. The terminal may accurately understand the user intention, thereby improving the usage experience of users.

Optionally, the first user instruction is "I want to ride a bike to the park in the picture", the information to be identified is a screenshot in the first application of the first terminal, and the address of the park is identified as "an intersection of Road A and Road B". The intention of the user may be obtained based on the information to be identified, i.e., to ride a bike to a certain destination. It may be determined based on the information to be identified that the destination of the user is the intersection of Road A and Road B. Then the target operation instruction is generated as" riding a bike to the intersection of Road A and Road B". The navigation information generated by the second application in the second terminal based on the target operation instruction is a navigation for riding to the intersection of Road A and Road B, which is more in line with the needs of the user, and the generated navigation path will be shared by the first terminal and the second terminal.

In a possible embodiment, in a call scenario, the user sees a phone number in the first application (such as an address book or a recruitment application) in the first terminal and wants to make a call. The user issues a voice instruction such as "I want to contact the person in the picture". The first operation information contained in the first user command indicates a user intention to make a call, but no specific phone number to be dialed has been determined. Then, by identifying the information to be identified (such as a screenshot) in the first application of the first terminal, such as picture information of a current interface and text information of the current interface, specific contact information (such as the phone number 139XXXXXXXX) of the person is determined. By combining the first operation information and the information to be identified, it may be obtained that the user needs to call this person at this time and it may be further determined that the target operation instruction is calling 139XXXXXXXX. By combining the information to be identified and the first operation information, the target operation instruction is generated. The terminal may obtain an instruction that the user wants to execute but is not specified in the first operation information. The user does not need to further input more complex instructions. The terminal may accurately understand the user intention, thereby improving the usage experience of users.

Optionally, determining, based on the information to be identified and the first operation information, the target operation instruction associated with the information to be identified and the first operation information includes:
obtaining a matching result by inputting the first operation information and the information to be identified as input parameters into a predetermined model, in which the matching result is related to the target operation instruction.

In this embodiment, the first operation information and the information to be identified are processed by a pre-trained model, features are extracted from the first operation information and the information to be identified, and feature data is processed to obtain the matching result.

In a possible embodiment, the model executes the following steps: performing feature extraction on the information to be identified to obtain a first feature vector; performing feature extraction on the first operation information in the first user instruction to obtain a second feature vector; and determining a matching result based on the first feature vector and the second feature vector. High-dimensional features are extracted from the first operation information and the information to be identified through feature extraction, and processing is performed based on the features to extract data that matches features of the first operation information with features of the information to be identified as the matching result. By extracting the features, the model may more accurately understand the user intention in the first operation information and the exact operation object in the information to be identified. Combining these features, the model may accurately understand the user intention and output the target operation instruction that the user wants to execute but has not yet clearly defined/specified.

In a possible embodiment, the information to be identified is a screenshot of the first application in the first terminal. Since the directly captured screenshot has a high resolution and occupies a large storage space, it takes a long time to directly input the screenshot into the model for analysis. Moreover, the analysis of the screenshot is often focused on a text in the screenshot, so appropriately reducing the resolution of the screenshot may have has a relatively small impact on the performance of model analysis. Therefore, the screenshot is compressed, and the compressed screenshot is then divided into a plurality of small images. Feature extraction is performed on each small image to obtain a plurality of third feature vectors, and these third feature vectors are spliced to obtain the first feature vector. By compressing the information to be identified, the storage space occupied by the information to be identified is reduced, the computing power required for the model to process the information to be identified is thus reduced, the information processing efficiency of the model is improved, the efficiency of generating the target operation instruction is high, and the user experience is improved.

In a possible embodiment, the first instruction data is voice data, and the first instruction data is converted into an instruction text through speech-to-text technology. The instruction text is split into a plurality of words, and a feature corresponding to each word is extracted and spliced to obtain the second feature vector.

In a possible embodiment, the model is set in a server on the terminal side or the cloud. The first user instruction and information to be identified collected in the first terminal are sent to the model for processing, so that the matching result is output and shared to the first terminal or the second terminal. When the server is set on the terminal side, the model processing and response rate may be greatly improved since the processing is performed locally. When the server is set on the cloud, data may be updated synchronously since the cloud has sufficient computing power, which significantly improves the accuracy. In this embodiment, whether the model is set on the cloud or the terminal side is not limited, which may be set according to a specific user scenario.

Optionally, the method further includes:
receiving at least one piece of candidate address information, in which the at least one piece of candidate address information is related to the information to be identified and the first operation information; and
receiving a second user instruction, and obtaining the target operation instruction based on the at least one piece of candidate address information.

In this embodiment, in a navigation scenario, the information to be identified and the first operation information are obtained from the first terminal, and the information to be identified and the first operation information are processed to extract a corresponding address from the information to be identified according to the intention in the first operation information. Since the information to be identified contains a plurality of addresses, a plurality of pieces of candidate address information are generated after processing, and the plurality of pieces of candidate address information are returned to the first terminal.

Since the plurality of pieces of candidate address information are received, the first terminal is still unable to confirm/determine an exact address. In order to generate an accurate target operation instruction, the first terminal displays these pieces of candidate address information to the user so that the user may make a selection. The user inputs a second user instruction, and the first terminal receives the second user instruction, so that one or more pieces of candidate address information are selected from the displayed candidate address information to generate a target operation instruction. By selecting the candidate address information and determining the target operation instruction through the second user instruction, the user intention may be accurately known, the user instruction may be accurately executed, and the user experience is improved.

Optionally, the address information may be an entity name or detailed address information. For example, the entity nouns are "Forbidden City" or "National Museum", and the detailed address information such as "XXX, Haidian District, Beijing", "No. X, XX Road", or "Intersection of XX Road and XX Road".

In a possible embodiment, the information to be identified is a screenshot of the first application, which contains an address. After processing the information to be identified and the first operation information, only one piece of candidate address information is generated. At this time, the destination of the user is determined, so the first terminal may directly generate, after receiving the candidate address information and the first operation information, the target operation instruction based on the candidate address information and the first operation information.

In a possible embodiment, the information to be identified is a screenshot of the first application, which contains a plurality of addresses. After processing the information to be identified and the first operation information, a plurality of pieces of candidate address information (address A, address B, address C) are generated. After receiving these pieces of candidate address information, the first terminal needs to further confirm with the user, an address the user wants to go to. The first terminal may display these pieces of candidate address information on the display, or broadcast by voice, these pieces of candidate address information, so as to prompt the user to select from these addresses. The user inputs a second user instruction "go to the address A", and the first terminal may determine that the target operation instruction is "navigate to the address A". Optionally, the user inputs a second user instruction "go to the address A first, then go to the address B", then the first terminal may determine that the target operation instruction is "navigate from the current location to the address A, and then navigate from the address A to the address B".

Optionally, receiving the second user instruction and obtaining the target operation instruction based on the at least one piece of candidate address information includes at least one of:
receiving a voice instruction from a user, selecting a target address from at least one candidate address, and obtaining the target operation instruction, in which the target operation instruction includes the target address; or
receiving an operation instruction input by a user through a click operation or a selection operation, determining a target address from at least one candidate address, and obtaining the target operation instruction, in which the target operation instruction includes the target address.

In this embodiment, there are a plurality of ways for the user to input the second user instruction. The user may input a voice instruction by speaking directly to the first terminal, or may manually operate on the first terminal. The input voice instruction includes a selection decision of a candidate address. After receiving the plurality of pieces of candidate address information, the first terminal displays the plurality of pieces of candidate address information on the display screen. The user may select the candidate address information by clicking the screen, or drawing a circle on the screen, or a key operation. By obtaining the second user instruction in a variety of ways, the user may input the instruction conveniently, the interaction efficiency between the user and the terminal is high, and the user experience is improved.

In a possible embodiment, after receiving the plurality of pieces of candidate address information (address A, address B, address C), the first terminal displays these pieces of candidate address information on the screen. The user says "navigate to the first address" or "navigate to the address A". After receiving the voice instruction, the first terminal converts the voice instruction into a text, matches the text with the candidate address information, and thus determines that the user wants to go to the address A, and the address A is the target address. The target operation instruction "navigate to the address A" may be determined based on the address A.

In a possible embodiment, after receiving the plurality of pieces of candidate address information (address A, address B, address C), the first terminal displays these pieces of candidate address information on the screen. The user clicks the "address A" on the touch screen, or circles the "address A". The first terminal receives the operation instruction and may determine that the user wants to go to the address A, and the address A is the target address. The target operation instruction "navigate to the address A" may be determined based on the address A.

Optionally, the method further includes:
receiving at least one piece of candidate call object information, in which the at least one piece of candidate call object information is related to the information to be identified and the first operation information; and
receiving a second user instruction, and obtaining the target operation instruction based on the at least one piece of candidate call object information.

In this embodiment, in a call scenario, the information to be identified and the first operation information are obtained from the first terminal, and the information to be identified and the first operation information are processed to extract a corresponding call object from the information to be identified according to the intention in the first operation information. Since the information to be identified contains a plurality of call objects, a plurality of pieces of candidate call object information are generated after processing, and the plurality of pieces of candidate call object information are returned to the first terminal.

Since the first terminal receives the plurality of pieces of candidate call object information, it is still unable to confirm an exact call object. In order to generate an accurate target operation instruction, the first terminal displays these pieces of candidate call object information to the user, so that the user may make a selection. The user inputs a second user instruction, and the first terminal receives the second user instruction, so that one or more pieces of candidate call object information are selected from the displayed candidate call object information to generate a target operation instruction. By selecting the candidate call object information and determining the target operation instruction through the second user instruction, the user intention may be accurately known, the user instruction may be accurately executed, and the user experience is improved.

Optionally, the call object information may be an object name or a phone number. For example, the object name is "Teacher A" or "Teacher B" in the address book.

In a possible embodiment, the information to be identified is a screenshot of the first application, which contains a call object. After processing the information to be identified and the first operation information, only one piece of candidate call object information "Teacher A" is generated. At this time, the destination of the user is determined, so the first terminal may directly generate, after receiving the candidate call object information and the first operation information, the target operation instruction "call the Teacher A" based on the candidate call object information and the first operation information.

In a possible embodiment, the information to be identified is a screenshot of the first application, which contains a plurality of call objects. After processing the information to be identified and the first operation information, a plurality of pieces of candidate call object information (contact A, contact B, contact C) are generated. After receiving these pieces of candidate call object information, the first terminal needs to further confirm with the user, a call object the user wants to call. The first terminal may display these pieces of candidate call object information on the display, or broadcast by voice, these pieces of candidate call object information, so as to prompt the user to select from these call objects. The user inputs a second user instruction "call the contact A", and the first terminal may determine that the target operation instruction is "call the contact A".

Optionally, the receiving the second user instruction and obtaining the target operation instruction based on the at least one piece of candidate call object information includes at least one of:
receiving a voice instruction from a user, selecting a target call object from at least one candidate call object, and obtaining the target operation instruction, in which the target operation instruction includes the target call object; or
receiving an operation instruction input by a user through a click operation or a selection operation, determining a target call object from at least one candidate call object, and obtaining the target operation instruction, in which the target operation instruction includes the target call object.

In this embodiment, there are a plurality of ways for the user to input the second user instruction. The user may input a voice instruction by speaking directly to the first terminal, or may manually operate on the first terminal. The input voice instruction includes a selection decision of a candidate call object. After receiving the plurality of pieces of candidate call object information, the first terminal displays the plurality of pieces of candidate call object information on the display screen. The user may select the candidate call object information by clicking the screen, or drawing a circle on the screen, or a key operation. By obtaining the second user instruction in a variety of ways, the user may input the instruction conveniently, the interaction efficiency between the user and the terminal is high, and the user experience is improved.

In a possible embodiment, after receiving the plurality of pieces of candidate call object information (contact A, contact B, contact C), the first terminal displays these of pieces of candidate call object information on the screen. The user says "contact the first call object" or "call the contact A". After receiving the voice instruction, the first terminal converts the voice instruction into a text and matches the text with the candidate call object information, and thus determines that the user wants to call the contact A, and the contact A is the target call object. The target operation instruction " call the contact A" may be determined based on the contact A.

In a possible embodiment, after receiving the plurality of pieces of candidate call object information (contact A, contact B, contact C), the first terminal displays these pieces of candidate call object information on the screen. The user clicks the "contact A" on the touch screen, or circles the "contact A". The first terminal receives the operation instruction and may determine that the user wants to call the contact A, and the contact A is the target call object. The target operation instruction "call the contact A" may be determined based on the contact A.

Optionally, the predetermined model is a multimodal large language model obtained by training with training data containing information to be identified and operation information.

In this embodiment, Multimodal Large Language Models (MLLMs) are deep learning models that combine a LLM and a large vision model (LVM) and may process and understand a plurality of types of data, such as texts, images, and audios.

The MLLMs may process a plurality of types of input data, such as text, images, audios, videos, etc., and may generate outputs in a plurality of modalities, such as generating an image from text, or generating a description from an image. During training, the MLLMs are trained on large-scale datasets containing text, visual data, acoustic data, and sometimes even sensor data. The MLLMs are able to establish connections between different modalities, thus supporting tasks that require understanding and generating content across a plurality of data types.

In a possible embodiment, by collecting historical data of user interactions with the terminal, the information to be identified and the operation information in the historical data are obtained to generate training data. The operation information is text or voice data, and the information to be identified is data in modalities such as text, images, audios, and videos. A sample in the training data contains the information to be identified, the operation information, and label data. The label data is a corresponding matching result between the information to be identified and the operation information in the sample, such as candidate address information or candidate target object information.

Each sample in the training data is input into the MMLMs for processing and the matching result is output. The matching result is compared with the label data corresponding to the sample, and a loss function representing a difference size is calculated. The parameters in the MMLMs are optimized with a goal of minimizing the loss function. After a plurality of rounds of optimization iterations for the parameters, the trained predetermined model may be obtained.

By processing the MMLMs with the information to be identified and the operation information, the capability of the MMLMs to understand various modal data may be improved, which better processes information in cross-modal tasks, and improves the efficiency and accuracy of matching. The matching result obtained by users is more accurate, thus improving the user experience.

Optionally, the method further includes:
obtaining a first wake-up instruction, in which the first wake-up instruction is triggered by an operation on the first terminal; and
in response to the first wake-up instruction, obtaining the first user instruction by collecting input information from a user.

In this embodiment, before the user inputs the first user instruction, a module or an application responsible for voice recognition in the first terminal may be awakened by the first wake-up instruction, so that the first terminal starts to receive voice or text instructions. After receiving the first wake-up instruction, the first terminal learns the user intention to input an instruction. Then, the first terminal starts to call its module or application, collects input information of the user, and obtains the first user instruction.

In a possible embodiment, a voice assistant in the first terminal collects and analyzes the user instruction. After the user says the first wake-up instruction "Hey, Xiao X", the first terminal starts to wake up the voice assistant application and is ready to receive the user voice instruction.

Optionally, obtaining the information to be identified of the first application in the first terminal includes:
obtaining image data or text data in the first terminal as the information to be identified.

In this embodiment, a command that the user wants to instruct is related to information displayed by the first application in the first terminal. The first terminal may extract a screenshot of the application, or obtain text in the application from the background as the information to be identified.

In a possible embodiment, the user sees a restaurant in the content displayed in the first application (a blog APP) of the first terminal (such as a mobile phone) and wants to go to this restaurant for dinner. Then the user may input a first user instruction "I want to go to the restaurant in the picture" by voice, and the first terminal captures an image of the first application or obtains the text in the first application as data to be identified.

Optionally, obtaining the image data or text data in the first terminal as the information to be identified includes at least one of:
obtaining the information to be identified by capturing an image displayed on the first terminal;
obtaining an area image specified by a user in the first terminal as the information to be identified; or
obtaining an image captured by the first terminal as the information to be identified.

In this embodiment, the first terminal may obtain image data of the first application in a variety of ways, such as taking a screenshot of the entire screen, obtaining an image of an area selected by the user, or scheduling a sensor in the first terminal to capture an image.

In a possible embodiment, the user sees a restaurant in the content displayed in the first application (a blog APP) of the first terminal (such as a mobile phone) and wants to go to this restaurant for dinner. Then the user may input a first user instruction "I want to go to the restaurant in the picture" by voice, and the first terminal captures an image of the first application or obtains the text in the first application as data to be identified. Or, the first terminal determines the area circled by the user and captures the image of the area circled by the user. By specifying the information to be identified in the first terminal in a variety of ways, the user may input the instruction conveniently, the interaction efficiency between the user and the terminal is high, and the user experience is improved.

Optionally, the method further includes:
receiving result information sent by the second terminal, in which the result information is related to an execution progress or an execution result of the target task.

In this embodiment, after the second terminal executes the target operation instruction, result information may be generated and transmitted to the first terminal through data transmission means, to allow the user to understand an execution state of the target operation instruction. By sharing the result information between terminals, the user may intuitively understand whether his/her intention has been executed and whether the execution is accurate, which improves the interaction experience of the user.

In a possible embodiment, in a navigation scenario, after the second terminal schedules its second application to execute the target operation instruction, the second terminal may generate result information of "navigation has started" and synchronize the information to the first terminal, so that the user may know that navigation has started.

In a possible embodiment, in a navigation scenario, after the second terminal schedules its second application to execute the target operation instruction, the second terminal may generate result information of "navigation path" and synchronize the information to the first terminal, so that the user may view the navigation path on the first terminal.

In a possible embodiment, in a call scenario, after the second terminal schedules its second application to execute the target operation instruction, the second terminal may generate result information of "a call has been placed " and synchronizes the information to the first terminal.

In a possible embodiment, in a call scenario, after the second terminal schedules its second application to execute the target operation instruction, the second terminal may generate result information of "a call voice" and synchronize the information to the first terminal, so that the user may view the call voice on the first terminal and answer the call at the same time.

FIG. 2 is a flowchart illustrating an interaction method according to an embodiment of the invention. As shown in FIG. 2, the method includes the following steps 201-202.

At 201, a target operation instruction is received, in which the target operation instruction is used to instruct a second terminal to execute a target task; the target operation instruction is related to first operation information and information to be identified of a first terminal, and the first terminal and the second terminal establish a network connection through a device identifier.

At 202, a second application is triggered to execute the target task based on the target operation instruction.

In this embodiment, the target operation instruction determined by the first operation information and the information to be identified of the first terminal is received by the second terminal, and the second terminal is a terminal of executing the target operation instruction. The user indicates a specific operation action to the first terminal through the first user instruction, but the exact operation object is not known from the perspective of the terminal. In order to obtain the exact operation object, this embodiment obtains information to be identified from the first application running in the first terminal. The information to be identified includes information related to the operation object. The identification is performed based on the information to be identified in combination with the first operation information to determine the target operation instruction. The target operation instruction contains the exact operation action and the exact operation object.

In a possible embodiment, the first terminal is a mobile terminal, such as a mobile phone, a tablet computer, a laptop computer, an augmented reality (AR) device, a virtual reality (VR) device, or the like.

In a possible embodiment, the second terminal includes a mobile phone, a smart watch, a vehicle, etc.

In a possible embodiment, in a navigation scenario, the user sees a restaurant in the first application (such as a social application) in the first terminal and wants to navigate to the restaurant. The user issues/makes a voice instruction or command, such as "I want to go to this restaurant". The first terminal obtains the first user instruction. The first operation information contained in the first user instruction indicates a user intention to navigate, but no specific restaurant to be navigated to has been determined. Then, by identifying the information to be identified in the first application of the first terminal, such as picture information of a current application interface, text information of the current application interface, or positioning data of the current application interface, a specific address of the restaurant (such as No. X, XX Road) is obtained. By combining the above voice instruction and the information to be identified, it may be obtained that the user needs to navigate to this restaurant at this time and share navigation information with the second terminal. As such, information interaction is quickly and conveniently achieved in a smart cockpit scenario, without a need to manually input an address into the second terminal (such as a central control screen of a vehicle), thus greatly improving the efficiency of multi-terminal interaction and enhancing the user experience.

In a possible embodiment, in a call scenario, the user sees a phone number in the first application (such as an address book or a recruitment application) in the first terminal and wants to make a call. The user issues a voice instruction such as "I want to contact the person in the picture". The first operation information contained in the first user command indicates a user intention to make a call, but no specific phone number to be called has been determined. Then, by identifying the information to be identified (such as a screenshot) in the first application of the first terminal, such as picture information of a current interface and text information of the current interface, specific contact information (such as the phone number 139XXXXXXXX) of the person is determined. By combining the above voice instruction and the information to be identified, it may be obtained that the user needs to call this person at this time and share the phone number with the second terminal. As such, information interaction is quickly and conveniently achieved in a smart cockpit scenario, without a need to manually input a phone number into the second terminal (such as a central control screen of a vehicle), thus greatly improving the efficiency of multi-terminal interaction and enhancing the user experience.

In a possible embodiment, the first operation information and the information to be identified are processed by a pre-trained model, features are extracted, and feature data is processed to obtain a matching result.

In a possible embodiment, the model executes the following steps: performing feature extraction on the information to be identified to obtain a first feature vector; performing feature extraction on the first operation information in the first user instruction to obtain a second feature vector; and determining a matching result based on the first feature vector and the second feature vector. High-dimensional features are extracted from the first operation information and the information to be identified through feature extraction, and processing is performed based on the features to extract data that matches features of the first operation information with features of the information to be identified as the matching result. By extracting the features, the model may more accurately understand the user intention in the first operation information and the exact operation object in the information to be identified. Combining these features, the model may accurately understand the user intention and output the target operation instruction that the user wants to execute but has not yet clearly defined/specified.

In a possible embodiment, the information to be identified is a screenshot of the first application in the first terminal. Since the directly captured screenshot has a high resolution and occupies a large storage space, it takes a long time to directly input the screenshot into the model for analysis. Moreover, the analysis of the screenshot is often focused on a text in the screenshot, so appropriately reducing the resolution of the screenshot may have has a relatively small impact on the performance of model analysis. Therefore, the screenshot is compressed, and the compressed screenshot is then divided into a plurality of small images. Feature extraction is performed on each small image to obtain a plurality of third feature vectors, and these third feature vectors are spliced to obtain the first feature vector. By compressing the information to be identified, the storage space occupied by the information to be identified is reduced, the computing power required for the model to process the information to be identified is thus reduced, the information processing efficiency of the model is improved, the efficiency of generating the target operation instruction is high, and the user experience is improved.

In a possible embodiment, the first instruction data is voice data, and the first instruction data is converted into an instruction text through speech-to-text technology. The instruction text is split into a plurality of words, and a feature corresponding to each word is extracted and spliced to obtain the second feature vector.

In a possible embodiment, the model is set in a server on the terminal side or the cloud. The first user instruction and information to be identified collected in the first terminal are sent to the model for processing, so that the matching result is output and shared to the first terminal or the second terminal. When the server is set on the terminal side, the model processing and response rate may be greatly improved since the processing is performed locally. When the server is set on the cloud, data may be updated synchronously since the cloud has sufficient computing power, which significantly improves the accuracy. In this embodiment, whether the model is set on the cloud or the terminal side is not limited, which may be set according to a specific user scenario.

Optionally, the method further includes:
receiving at least one piece of candidate address information, in which the at least one piece of candidate address information is related to the information to be identified and the first operation information; and
receiving a second user instruction, and obtaining the target operation instruction by determining the at least one piece of candidate call object information based on the second user instruction.

In this embodiment, in a navigation scenario, the information to be identified and the first operation information are obtained from the first terminal, and the information to be identified and the first operation information are processed to extract a corresponding address from the information to be identified according to the intention in the first operation information. Since the information to be identified contains a plurality of addresses, a plurality of pieces of candidate address information are generated after processing, and the plurality of pieces of candidate address information are returned to the first terminal.

Since the plurality of pieces of candidate address information are received, the second terminal is still unable to confirm an exact address. In order to generate an accurate target operation instruction, the second terminal displays these pieces of candidate address information to the user so that the user may make a selection. The user inputs a second user instruction, and the second terminal receives the second user instruction, so that one or more pieces of candidate address information are selected from the displayed candidate address information to generate a target operation instruction. By selecting the candidate address information and determining the target operation instruction through the second user instruction, the user intention may be accurately known, the user instruction may be accurately executed, and the user experience is improved.

Optionally, the address information may be an entity name or detailed address information. For example, the entity nouns are "Forbidden City" or "National Museum", and the detailed address information such as "XXX, Haidian District, Beijing", "No. X, XX Road", or "Intersection of XX Road and XX Road".

In a possible embodiment, the information to be identified is a screenshot of the first application, which contains an address. After processing the information to be identified and the first operation information, only one piece of candidate address information is generated. At this time, the destination of the user is determined, so the second terminal may directly generate, after receiving the candidate address information and the first operation information, the target operation instruction based on this candidate address information and the first operation information.

In a possible embodiment, the information to be identified is a screenshot of the first application, which contains a plurality of addresses. After processing the information to be identified and the first operation information, a plurality of pieces of candidate address information (address A, address B, address C) are generated. After receiving these pieces of candidate address information, the second terminal needs to further confirm with the user, an address the user wants to go to. The second terminal may display these pieces of candidate address information on the display, or broadcast by voice, these pieces of candidate address information, so as to prompt the user to select from these addresses. The user inputs a second user instruction "go to the address A", and the second terminal may determine that the target operation instruction is "navigate to the address A". Optionally, the user inputs a second user instruction "go to the address A first, then go to the address B", then the second terminal may determine that the target operation instruction is "navigate from the current location to the address A, and then navigate from the address A to the address B".

Optionally, receiving the second user instruction and obtaining the target operation instruction by determining the at least one piece of candidate call object information based on the second user instruction includes at least one of:
receiving a voice instruction from a user, selecting a target address from at least one candidate address, and obtaining the target operation instruction, in which the target operation instruction includes the target address; or
receiving an operation instruction input by a user through a click operation or a selection operation, determining a target address from at least one candidate address, and obtaining the target operation instruction, in which the target operation instruction includes the target address.

In this embodiment, there are a plurality of ways for the user to input the second user instruction. The user may input a voice instruction by speaking directly to the first terminal, or may manually operate on the second terminal. The input voice command includes a selection decision of a candidate address. After receiving the plurality of pieces of candidate address information, the second terminal displays the plurality of pieces of candidate address information on the display screen. The user may select the candidate address information by clicking the screen, drawing a circle on the screen, or a key operation. By obtaining the second user instruction in a variety of ways, the user may input the instruction conveniently, the interaction efficiency between the user and the terminal is high, and the user experience is improved.

In a possible embodiment, after receiving the plurality of pieces of candidate address information (address A, address B, address C), the second terminal displays these pieces of candidate address information on the screen. The user says "navigate to the first address" or "navigate to the address A". After receiving the voice instruction, the second terminal converts the voice instruction into a text, matches the text with the candidate address information, and thus determines that the user wants to go to the address A, and the address A is the target address. The target operation instruction "navigate to the address A" may be determined based on the address A.

In a possible embodiment, after receiving the plurality of pieces of candidate address information (address A, address B, address C), the second terminal displays these pieces of candidate address information on the screen. The user clicks the "address A" on the touch screen, or circles the "address A". The second terminal receives the operation instruction and may determine that the user wants to go to the address A, and the address A is the target address. The target operation instruction "navigate to the address A" may be determined based on the address A.

Optionally, the method further includes:
obtaining the target operation instruction by receiving a target address sent by the first terminal, in which the target operation instruction includes the target address.

In this embodiment, the first terminal receives at least one piece of candidate address information, in which the at least one piece of candidate address information is related to the information to be identified and the first operation information; receives a second user instruction, and obtains the target operation instruction based on the at least one piece of candidate address information. The first terminal directly sends the selected address to the second terminal, and the second terminal navigates according to the address. By interacting with the first terminal, the second terminal may efficiently obtain the target address selected by the user and execute the target operation instruction, which may improve the interaction efficiency between the terminals, execute the user instruction more efficiently, and improve the user experience.

Optionally, the method further includes:
receiving at least one piece of candidate call object information, in which the at least one piece of candidate call object information is related to the information to be identified and the first operation information; and
receiving a second user instruction, and obtaining the target operation instruction by determining the at least one piece of candidate call object information based on the second user instruction.

In this embodiment, in a call scenario, the information to be identified and the first operation information are obtained from the first terminal, and the information to be identified and the first operation information are processed to extract a corresponding call object from the information to be identified according to the intention in the first operation information. Since the information to be identified contains a plurality of call objects, a plurality of pieces of candidate call object information are generated after processing, and the plurality of pieces of candidate call object information are returned to the first terminal.

Since the second terminal receives the plurality of pieces of candidate call object information, it is still unable to confirm an exact call object. In order to generate an accurate target operation instruction, the second terminal displays these pieces of candidate call object information to the user, so that the user may make a selection. The user inputs a second user instruction, and the second terminal receives the second user instruction, so that one or more pieces of candidate call object information are selected from the displayed candidate call object information to generate a target operation instruction. By selecting the candidate call object information and determining the target operation instruction through the second user instruction, the user intention may be accurately known, the user instruction may be accurately executed, and the user experience is improved.

Optionally, the call object information may be an object name or a phone number. For example, the object name is "Teacher A" or "Teacher B" in the address book.

In a possible embodiment, the information to be identified is a screenshot of the first application, which contains a call object. After processing the information to be identified and the first operation information, only one piece of candidate call object information "Teacher A" is generated. At this time, the destination of the user is determined, so the second terminal may directly generate, after receiving the candidate call object information and the first operation information, the target operation instruction "call the Teacher A" based on the candidate call object information and the first operation information.

In a possible embodiment, the information to be identified is a screenshot of the first application, which contains a plurality of call objects. After processing the information to be identified and the first operation information, a plurality of pieces of candidate call object information (contact A, contact B, contact C) are generated. After receiving these pieces of candidate call object information, the second terminal needs to further confirm with the user, a call object the user wants to call. The second terminal may display these pieces of candidate call object information on the display, or broadcast by voice, these pieces of candidate call object information, so as to prompt the user to select from these call objects. The user inputs a second user instruction "call the contact A", and the second terminal may determine that the target operation instruction is "call the contact A".

Optionally, receiving the second user instruction, and obtaining the target operation instruction by determining the at least one piece of candidate call object information based on the second user instruction includes at least one of:
receiving a voice instruction from a user, selecting a target call object from at least one candidate call object, and obtaining the target operation instruction, in which the target operation instruction includes the target call object; or
receiving an operation instruction input by a user through a click operation or a selection operation, determining a target call object from at least one candidate call object, and obtaining the target operation instruction, in which the target operation instruction includes the target call object.

In this embodiment, there are a plurality of ways for the user to input the second user instruction. The user may input a voice instruction by speaking directly to the second terminal, or may manually operate on the second terminal. The input voice instruction includes a selection decision of a candidate call object. After receiving the plurality of pieces of candidate call object information, the second terminal displays the plurality of pieces of candidate call object information on the display screen. The user may select the candidate call object information by clicking the screen, or drawing a circle on the screen, or a key operation. By obtaining the second user instruction in a variety of ways, the user may input the instruction conveniently, the interaction efficiency between the user and the terminal is high, and the user experience is improved.

In a possible embodiment, after receiving the plurality of pieces of candidate call object information (contact A, contact B, contact C), the second terminal displays these pieces of candidate call object information on the screen. The user says "contact the first call object" or "call the contact A". After receiving the voice instruction, the second terminal converts the voice instruction into a text and matches the text with the candidate call object information, and thus determines that the user wants to call the contact A, and the contact A is the target call object. The target operation instruction " call the contact A" may be determined based on the contact A.

In a possible embodiment, after receiving the plurality of pieces of candidate call object information (contact A, contact B, contact C), the second terminal displays these pieces of candidate call object information on the screen. The user clicks the "contact A" on the touch screen, or circles the "contact A". The second terminal receives the operation instruction and may determine that the user wants to call the contact A, and the contact A is the target call object. The target operation instruction "call the contact A" may be determined based on the contact A.

Optionally, the method further includes:
obtaining the target operation instruction by receiving a target call object sent by the first terminal, in which the target operation instruction includes the target call object.

In this embodiment, the first terminal receives at least one piece of call object information, in which the at least one piece of candidate call object information is related to the information to be identified and the first operation information; receives a second user instruction, and obtains the target operation instruction based on the at least one piece of candidate call object information. The first terminal directly sends the selected call object to the second terminal, and the second terminal makes the call based on the call object. By interacting with the first terminal, the second terminal may efficiently obtain the target call object selected by the user and execute the target operation instruction, which may improve the interaction efficiency between the terminals, execute the user instruction more efficiently, and improve the user experience.

Optionally, the method further includes:
generating result information related to an execution progress or an execution result of the target task; or
generating result information and sending the result information to the first terminal, in which the result information is related to an execution progress or an execution result of the target task.

In this embodiment, after the second terminal executes the target operation instruction, result information may be generated and transmitted to the first terminal through data transmission means, to allow the user to understand an execution state of the target operation instruction.

In a possible embodiment, in a navigation scenario, after the second terminal schedules its second application to execute the target operation instruction, the second terminal may generate result information of "navigation has started" and synchronize the information to the first terminal, so that the user may know that navigation has started.

In a possible embodiment, in a navigation scenario, after the second terminal schedules its second application to execute the target operation instruction, the second terminal may generate result information of "navigation path" and synchronize the information to the first terminal, so that the user may view the navigation path on the first terminal.

In a possible embodiment, in a call scenario, after the second terminal schedules its second application to execute the target operation instruction, the second terminal may generate result information of "a call has been placed " and synchronizes the information to the first terminal.

In a possible embodiment, in a call scenario, after the second terminal schedules its second application to execute the target operation instruction, the second terminal may generate result information of "a call voice" and synchronize the information to the first terminal, so that the user may view the call voice on the first terminal and answer the call at the same time.

FIG. 3 is a flowchart illustrating another interaction method according to an embodiment of the invention. As shown in FIG. 3, the method includes the following steps 301-304.

At 301, a first user instruction is obtained, in which the first user instruction includes first operation information.

At 302, information to be identified of a first application in a first terminal is obtained.

At 303, a target operation instruction is determined based on the information to be identified and the first operation information.

At 304, a second application of a second terminal is triggered based on the target operation instruction to execute a target task. the first terminal and the second terminal establish a network connection through a device identifier.

In this embodiment, the method is implemented by a system consisting of the first terminal and the second terminal, where the first terminal is a terminal that provides the information to be identified. In a scenario of instruction intercommunication, the first terminal is used to determine the target operation instruction and share it with the second terminal, and the second terminal executes the target operation instruction.

Before determining the target operation instruction, the first terminal needs to obtain the first user instruction input by the user and obtain the information to be identified of the first application in the first terminal. The target operation instruction is determined based on the information to be identified and the first user instruction.

In an embodiment, the first operation information included in the first user instruction represents an operation that the user wants to perform. The user indicates a specific operation action to the first terminal through the first user instruction, but the exact operation object is not known from the perspective of the terminal. In order to obtain the exact operation object, this embodiment obtains information to be identified from the first application running in the first terminal. The information to be identified includes information related to the operation object. The identification is performed based on the information to be identified in combination with the first operation information to determine the target operation instruction. The target operation instruction contains the exact operation action and the exact operation object.

In a possible embodiment, the first terminal is a mobile terminal, such as a mobile phone, a tablet computer, a laptop computer, an augmented reality (AR) device, a virtual reality (VR) device, or the like.

In a possible embodiment, the second terminal includes a mobile phone, a smart watch, a vehicle, etc.

In a possible embodiment, in a navigation scenario, the user sees a restaurant in the first application (such as a social application) in the first terminal and wants to navigate to the restaurant. The user issues/makes a voice instruction or command, such as "I want to go to this restaurant". The first terminal obtains the first user instruction. The first operation information contained in the first user instruction indicates a user intention to navigate, but no specific restaurant to be navigated to has been determined. Then, by identifying the information to be identified in the first application of the first terminal, such as picture information of a current application interface, text information of the current application interface, or positioning data of the current application interface, a specific address of the restaurant (such as No. X, XX Road) is obtained. By combining the above voice instruction and the information to be identified, it may be obtained that the user needs to navigate to this restaurant at this time and share navigation information with the second terminal. As such, information interaction is quickly and conveniently achieved in a smart cockpit scenario, without a need to manually input an address into the second terminal (such as a central control screen of a vehicle), thus greatly improving the efficiency of multi-terminal interaction and enhancing the user experience.

In a possible embodiment, in a call scenario, the user sees a phone number in the first application (such as an address book or a recruitment application) in the first terminal and wants to make a call. The user issues a voice instruction such as "I want to contact the person in the picture". The first operation information contained in the first user instruction indicates a user intention to make a call, but no specific phone number to be called has been determined. Then, by identifying the information to be identified (such as a screenshot) in the first application of the first terminal, such as picture information of a current interface and text information of the current interface, specific contact information (such as the phone number 139XXXXXXXX) of the person is determined. By combining the above voice instruction and the information to be identified, it may be obtained that the user needs to call this person at this time and share the phone number with the second terminal. As such, information interaction is quickly and conveniently achieved in a smart cockpit scenario, without a need to manually input a phone number into the second terminal (such as a central control screen of a vehicle), thus greatly improving the efficiency of multi-terminal interaction and enhancing the user experience.

In a possible embodiment, the execution order of the step 301, step 302, step 303, and step 304 is not limited, and these steps may be executed sequentially or simultaneously.

Optionally, the first terminal and the second terminal are connected via communication means.

Optionally, the communication means includes short-distance communication and/or long-distance communication. The short-distance communications include Bluetooth, Zigbee, etc., while the long-distance communications include cellular networks, wireless fidelity (WIFI), etc. Optionally, the first terminal and the second terminal may establish a connection directly through the short-distance communication, or may establish a connection through the short-distance communication and/or the long-distance communication under the same user account, so that the instructions may be shared quickly.

Optionally, determining the target operation instruction based on the information to be identified and the first operation information includes:
obtaining a matching result by inputting the first operation information and the information to be identified as input parameters into a predetermined model, in which the matching result is related to the target operation instruction.

In this embodiment, the first operation information and the information to be identified are processed by the predetermined model, features are extracted from the first operation information and the information to be identified, and feature data is processed to obtain the matching result.

In a possible embodiment, the model executes the following steps: performing feature extraction on the information to be identified to obtain a first feature vector; performing feature extraction on the first operation information in the first user instruction to obtain a second feature vector; and determining a matching result based on the first feature vector and the second feature vector. High-dimensional features are extracted from the first operation information and the information to be identified through feature extraction, and processing is performed based on the features to extract data that matches features of the first operation information with features of the information to be identified as the matching result. By extracting the features, the model may more accurately understand the user intention in the first operation information and the exact operation object in the information to be identified. Combining these features, the model may accurately understand the user intention and output the target operation instruction that the user wants to execute but has not yet clearly defined/specified.

In a possible embodiment, the information to be identified is a screenshot of the first application in the first terminal. Since the directly captured screenshot has a high resolution and occupies a large storage space, it takes a long time to directly input the screenshot into the model for analysis. Moreover, the analysis of the screenshot is often focused on a text in the screenshot, so appropriately reducing the resolution of the screenshot may have has a relatively small impact on the performance of model analysis. Therefore, the screenshot is compressed, and the compressed screenshot is then divided into a plurality of small images. Feature extraction is performed on each small image to obtain a plurality of third feature vectors, and these third feature vectors are spliced to obtain the first feature vector. By compressing the information to be identified, the storage space occupied by the information to be identified is reduced, the computing power required for the model to process the information to be identified is thus reduced, the information processing efficiency of the model is improved, the efficiency of generating the target operation instruction is high, and the user experience is improved.

In a possible embodiment, the first instruction data is voice data, and the first instruction data is converted into an instruction text through speech-to-text technology. The instruction text is split into a plurality of words, and a feature corresponding to each word is extracted and spliced to obtain the second feature vector.

In a possible embodiment, the model is set in a server on the terminal side or the cloud. The first user instruction and information to be identified collected in the first terminal are sent to the model for processing, so that the matching result is output and shared to the first terminal or the second terminal. When the server is set on the terminal side, the model processing and response rate may be greatly improved since the processing is performed locally. When the server is set on the cloud, data may be updated synchronously since the cloud has sufficient computing power, which significantly improves the accuracy. In this embodiment, whether the model is set on the cloud or the terminal side is not limited, which may be set according to a specific user scenario.

Optionally, the method further includes:
outputting at least one piece of candidate address information via the predetermined model, in which the at least one piece of candidate address information is related to the information to be identified and the first operation information;
receiving a second user instruction, and obtaining the target operation instruction by determining the at least one piece of candidate address information based on the second user instruction.

In this embodiment, the execution subject of the steps may be the first terminal or the second terminal. In a navigation scenario, the information to be identified and the first operation information are obtained from the first terminal, and the information to be identified and the first operation information are processed to extract a corresponding address from the information to be identified according to the intention in the first operation information. Since the information to be identified contains a plurality of addresses, a plurality of pieces of candidate address information are generated after processing, and the plurality of pieces of candidate address information are returned to the first terminal.

Since the plurality of pieces of candidate address information are received, the terminal is still unable to confirm an exact address. In order to generate an accurate target operation instruction, the terminal displays these pieces of candidate address information to the user so that the user may make a selection. The user inputs a second user instruction, and the terminal receives the second user instruction, so that one or more pieces of candidate address information are selected from the displayed candidate address information to generate a target operation instruction. By selecting the candidate address information and determining the target operation instruction through the second user instruction, the user intention may be accurately known, the user instruction may be accurately executed, and the user experience is improved.

Optionally, the address information may be an entity name or detailed address information. For example, the entity nouns are "Forbidden City" or "National Museum", and the detailed address information such as "XXX, Haidian District, Beijing", "No. X, XX Road", or "Intersection of XX Road and XX Road".

In a possible embodiment, the information to be identified is a screenshot of the first application, which contains an address. After processing the information to be identified and the first operation information, only one piece of candidate address information is generated. At this time, the destination of the user is determined, so the terminal may directly generate, after receiving the candidate address information and the first operation information, the target operation instruction based on the candidate address information and the first operation information.

In a possible embodiment, the information to be identified is a screenshot of the first application, which contains a plurality of addresses. After processing the information to be identified and the first operation information, a plurality of pieces of candidate address information (address A, address B, address C) are generated. After receiving these pieces of candidate address information, the terminal needs to further confirm with the user, an address the user wants to go to. The terminal may display these pieces of candidate address information on the display, or broadcast by voice, these pieces of candidate address information, so as to prompt the user to select from these addresses. The user inputs a second user instruction "go to the address A", and the terminal may determine that the target operation instruction is "navigate to the address A". Optionally, the user inputs a second user instruction "go to the address A first, then go to the address B", then the terminal may determine that the target operation instruction is "navigate from the current location to the address A, and then navigate from the address A to the address B".

Optionally, receiving the second user instruction, and obtaining the target operation instruction by determining the at least one piece of candidate address information based on the second user instruction includes at least one of:
receiving a voice instruction from a user, selecting a target address from at least one candidate address, and obtaining the target operation instruction, in which the target operation instruction includes the target address; or
receiving an operation instruction input by a user through a click operation or a selection operation, determining a target address from at least one candidate address, and obtaining the target operation instruction, in which the target operation instruction includes the target address.

In this embodiment, the execution subject of the steps may be the first terminal or the second terminal. There are a plurality of ways for the user to input the second user instruction. The user may input a voice instruction by speaking directly to the terminal, or may manually operate on the terminal. The input voice instruction includes a selection decision of a candidate address. After receiving the plurality of pieces of candidate address information, the terminal displays the plurality of pieces of candidate address information on the display screen. The user may select the candidate address information by clicking the screen, or drawing a circle on the screen, or a key operation. By obtaining the second user instruction in a variety of ways, the user may input the instruction conveniently, the interaction efficiency between the user and the terminal is high, and the user experience is improved.

In a possible embodiment, after receiving the plurality of pieces of candidate address information (address A, address B, address C), the terminal displays these pieces of candidate address information on the screen. The user says "navigate to the first address" or "navigate to the address A". After receiving the voice instruction, the terminal converts the voice instruction into a text, matches the text with the candidate address information, and thus determines that the user wants to go to the address A, and the address A is the target address. The target operation instruction "navigate to the address A" may be determined based on the address A.

In a possible embodiment, after receiving the plurality of pieces of candidate address information (address A, address B, address C), the terminal displays these pieces of candidate address information on the screen. The user clicks the "address A" on the touch screen, or circles the "address A". The terminal receives the operation instruction and may determine that the user wants to go to the address A, and the address A is the target address. The target operation instruction "navigate to the address A" may be determined based on the address A.

Optionally, the method further includes:
outputting at least one piece of candidate call object information via the predetermined model, in which the at least one piece of candidate call object information is related to the information to be identified and the first operation information; and
receiving a second user instruction, and obtaining the target operation instruction by determining the at least one piece of candidate call object information based on the second user instruction.

In this embodiment, the execution subject of the steps may be the first terminal or the second terminal. In a call scenario, the information to be identified and the first operation information are obtained from the first terminal, and the information to be identified and the first operation information are processed to extract a corresponding call object from the information to be identified according to the intention in the first operation information. Since the information to be identified contains a plurality of call objects, a plurality of pieces of candidate call object information are generated after processing, and the plurality of pieces of candidate call object information are returned to the first terminal.

Since the terminal receives the plurality of pieces of candidate call object information, it is still unable to confirm an exact call object. In order to generate an accurate target operation instruction, the terminal displays these pieces of candidate call object information to the user, so that the user may make a selection. The user inputs a second user instruction, and the terminal receives the second user instruction, so that one or more pieces of candidate call object information are selected from the displayed candidate call object information to generate a target operation instruction. By selecting the candidate call object information and determining the target operation instruction through the second user instruction, the user intention may be accurately known, the user instruction may be accurately executed, and the user experience is improved.

Optionally, the call object information may be an object name or a phone number. For example, the object name is "Teacher A" or "Teacher B" in the address book.

In a possible embodiment, the information to be identified is a screenshot of the first application, which contains a call object. After processing the information to be identified and the first operation information, only one piece of candidate call object information "Teacher A" is generated. At this time, the destination of the user is determined, so the terminal may directly generate, after receiving the candidate call object information and the first operation information, the target operation instruction "call the Teacher A" based on the candidate call object information and the first operation information.

In a possible embodiment, the information to be identified is a screenshot of the first application, which contains a plurality of call objects. After processing the information to be identified and the first operation information, a plurality of pieces of candidate call object information (contact A, contact B, contact C) are generated. After receiving these pieces of candidate call object information, the terminal needs to further confirm with the user, a call object the user wants to call. The terminal may display these pieces of candidate call object information on the display, or broadcast by voice, these pieces of candidate call object information, so as to prompt the user to select from these call objects. The user inputs a second user instruction "call the contact A", and the terminal may determine that the target operation instruction is "call the contact A".

Optionally, receiving the second user instruction, and obtaining the target operation instruction by determining the at least one piece of candidate call object information based on the second user instruction includes at least one of:
receiving a voice instruction from a user, selecting a target call object from at least one candidate call object, and obtaining the target operation instruction, in which the target operation instruction includes the target call object; or
receiving an operation instruction input by a user through a click operation or a selection operation, determining a target call object from at least one candidate call object, and obtaining the target operation instruction, in which the target operation instruction includes the target call object.

In this embodiment, the execution subject of the steps may be the first terminal or the second terminal. There are a plurality of ways for the user to input the second user instruction. The user may input a voice instruction by speaking directly to the terminal, or may manually operate on the terminal. The input voice instruction includes a selection decision of a candidate call object. After receiving the plurality of pieces of candidate call object information, the terminal displays the plurality of pieces of candidate call object information on the display screen. The user may select the candidate call object information by clicking the screen, or drawing a circle on the screen, or a key operation. By obtaining the second user instruction in a variety of ways, the user may input the instruction conveniently, the interaction efficiency between the user and the terminal is high, and the user experience is improved.

In a possible embodiment, after receiving the plurality of pieces of candidate call object information (contact A, contact B, contact C), the terminal displays these of pieces of candidate call object information on the screen. The user says "contact the first call object" or "call the contact A". After receiving the voice instruction, the terminal converts the voice instruction into a text and matches the text with the candidate call object information, and thus determines that the user wants to call the contact A, and the contact A is the target call object. The target operation instruction " call the contact A" may be determined based on the contact A.

In a possible embodiment, after receiving the plurality of pieces of candidate call object information (contact A, contact B, contact C), the terminal displays these pieces of candidate call object information on the screen. The user clicks the "contact A" on the touch screen, or circles the "contact A". The terminal receives the operation instruction and may determine that the user wants to call the contact A, and the contact A is the target call object. The target operation instruction "call the contact A" may be determined based on the contact A.

Optionally, the predetermined model is a multimodal large language model obtained by training with training data containing information to be identified and operation information.

In this embodiment, MLLMs are deep learning models that combine a LLM and a LVM and may process and understand a plurality of types of data, such as texts, images, and audios.

The MLLMs may process a plurality of types of input data, such as text, images, audios, videos, etc., and may generate outputs in a plurality of modalities, such as generating an image from text, or generating a description from an image. During training, the MLLMs are trained on large-scale datasets containing text, visual data, acoustic data, and sometimes even sensor data. The MLLMs are able to establish connections between different modalities, thus supporting tasks that require understanding and generating content across a plurality of data types.

In a possible embodiment, by collecting historical data of user interactions with the terminal, the information to be identified and the operation information in the historical data are obtained to generate training data. The operation information is text or voice data, and the information to be identified is data in modalities such as text, images, audios, and videos. A sample in the training data contains the information to be identified, the operation information, and label data. The label data is a corresponding matching result between the information to be identified and the operation information in the sample, such as candidate address information or candidate target object information.

Each sample in the training data is input into the MMLMs for processing and the matching result is output. The matching result is compared with the label data corresponding to the sample, and a loss function representing a difference size is calculated. The parameters in the MMLMs are optimized with a goal of minimizing the loss function. After a plurality of rounds of optimization iterations for the parameters, the trained predetermined model may be obtained.

By processing the MMLMs with the information to be identified and the operation information, the capability of the MMLMs to understand various modal data may be improved, which better processes information in cross-modal tasks, and improves the efficiency and accuracy of matching. The matching result obtained by users is more accurate, thus improving the user experience.

Optionally, the method further includes:
obtaining a first wake-up instruction, in which the first wake-up instruction is triggered by an operation on the first terminal; and
in response to the first wake-up instruction, obtaining the first user instruction by collecting input information from a user.

In this embodiment, before the user inputs the first user instruction, a module or an application responsible for voice recognition in the first terminal may be awakened by the first wake-up instruction, so that the first terminal starts to receive voice or text instructions. After receiving the first wake-up instruction, the first terminal learns the user intention to input an instruction. Then, the first terminal starts to call its module or application, collects input information of the user, and obtains the first user instruction.

In a possible embodiment, a voice assistant in the first terminal collects and analyzes the user instruction. After the user says the first wake-up instruction "Hey, Xiao X", the first terminal starts to wake up the voice assistant application and is ready to receive the user voice instruction.

Optionally, obtaining the information to be identified of the first application in the first terminal includes:
obtaining image data or text data in the first terminal as the information to be identified.

In this embodiment, a command that the user wants to instruct is related to information displayed by the first application in the first terminal. The first terminal may extract a screenshot of the application, or obtain text in the application from the background as the information to be identified.

In a possible embodiment, the user sees a restaurant in the content displayed in the first application (a blog APP) of the first terminal (such as a mobile phone) and wants to go to this restaurant for dinner. Then the user may input a first user instruction "I want to go to the restaurant in the picture" by voice, and the first terminal captures an image of the first application or obtains the text in the first application as data to be identified.

Optionally, obtaining the image data or text data in the first terminal as the information to be identified includes at least one of:
obtaining the information to be identified by capturing an image displayed on the first terminal;
obtaining an area image specified by a user in the first terminal as the information to be identified; or
obtaining an image captured by the first terminal as the information to be identified.

In this embodiment, the first terminal may obtain image data of the first application in a variety of ways, such as taking a screenshot of the entire screen, obtaining an image of an area selected by the user, or scheduling a sensor in the first terminal to capture an image.

In a possible embodiment, the user sees a restaurant in the content displayed in the first application (a blog APP) of the first terminal (such as a mobile phone) and wants to go to this restaurant for dinner. Then the user may input a first user instruction "I want to go to the restaurant in the picture" by voice, and the first terminal captures an image of the first application or obtains the text in the first application as data to be identified. Or, the first terminal determines the area circled by the user and captures the image of the area circled by the user. By specifying the information to be identified in the first terminal in a variety of ways, the user may input the instruction conveniently, the interaction efficiency between the user and the terminal is high, and the user experience is improved.

In order to implement the above embodiments, this embodiment of the present invention also proposes an interaction apparatus.

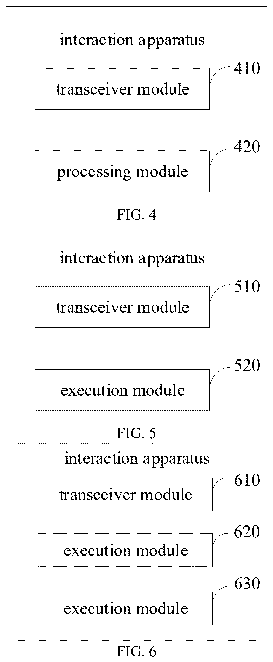

FIG. 4 is a structure diagram illustrating an interaction apparatus according to an embodiment of the invention.

As shown in FIG. 4, the interaction apparatus may include a transceiver module 410 and a processing module 420.

The transceiver module 410 is configured to obtain a first user instruction, in which the first user instruction includes first operation information.

The processing module 420 is configured to obtain information to be identified of a first application in a first terminal to determine a target operation instruction associated with the information to be identified and the first operation information, in which the target operation instruction is used to trigger a second application of a second terminal to execute a target task, and the first terminal and the second terminal establish a network connection through a device identifier.

Optionally, the interaction apparatus also includes an instruction determination module.

The instruction determination module is configured to determine, based on the information to be identified and the first operation information, the target operation instruction associated with the information to be identified and the first operation information.

Optionally, the instruction determination module includes a matching module.

The matching module is configured to obtain a matching result by inputting the first operation information and the information to be identified as input parameters into a predetermined model, in which the matching result is related to the target operation instruction.

Optionally, the interaction apparatus also includes an address receiving module and a second instruction receiving module.

The address receiving module is configured to receive at least one piece of candidate address information, in which the at least one piece of candidate address information is related to the information to be identified and the first operation information.

The second instruction receiving module is configured to receive a second user instruction, and obtain the target operation instruction based on the at least one piece of candidate address information.

Optionally, the second instruction receiving module includes a voice receiving module and/or an operation receiving module.

The voice receiving module is configured to receive a voice instruction from a user, select a target address from at least one candidate address, and obtain the target operation instruction, in which the target operation instruction includes the target address.

The operation receiving module is configured to receive an operation instruction input by a user through a click operation or a selection operation, determine a target address from at least one candidate address, and obtain the target operation instruction, in which the target operation instruction includes the target address.

Optionally, the interaction apparatus also includes an object receiving module and a second instruction receiving module.

The object receiving module is configured to receive at least one piece of candidate call object information, in which the at least one piece of candidate call object information is related to the information to be identified and the first operation information.

The second instruction receiving module is configured to receive a second user instruction and obtain the target operation instruction based on the at least one piece of candidate call object information.

Optionally, the second instruction receiving module includes a voice receiving module and/or an operation receiving module.

The voice receiving module is configured to receive a voice instruction from a user, select a target call object from at least one candidate call object, and obtain the target operation instruction, in which the target operation instruction includes the target call object.

The operation receiving module is configured to receive an operation instruction input by a user through a click operation or a selection operation, determine a target call object from at least one candidate call object, and obtain the target operation instruction, in which the target operation instruction includes the target call object.

Optionally, the predetermined model is a multimodal large language model obtained by training with training data containing information to be identified and operation information.

Optionally, the interaction apparatus also includes a wake-up module and a collection module.

The wake-up module is configured to obtain a first wake-up instruction, in which the first wake-up instruction is triggered by an operation on the first terminal.

The collection module is configured to in response to the first wake-up instruction, obtain the first user instruction by collecting input information from a user.

Optionally, the processing module 420 includes an information obtaining module.

The information obtaining module is configured to obtain image data or text data in the first terminal as the information to be identified.

Optionally, the information obtaining module includes a first obtaining submodule, a second obtaining submodule, and/or a third obtaining submodule

The first obtaining submodule is configured to obtain the information to be identified by capturing an image displayed on the first terminal.

The second obtaining submodule is configured to obtain an area image specified by a user in the first terminal as the information to be identified.

The third obtaining submodule is configured to obtain an image captured by the first terminal as the information to be identified.

Optionally, the interaction apparatus further includes a result obtaining module.

The result obtaining module is configured to receive result information sent by the second terminal, in which the result information is related to an execution progress or an execution result of the target task.

It needs to be noted that the above explanations of the method embodiments are also applicable to the apparatus in the embodiment, which will not be repeated here.

In order to implement the above embodiments, this embodiment of the present invention also proposes an interaction apparatus.

FIG. 5 is a structure diagram illustrating an interaction apparatus according to an embodiment of the invention.

As shown in FIG. 5, the interaction apparatus may include a transceiver module 510 and an execution module 520.

The transceiver module 510 is configured to receive a target operation instruction, in which the target operation instruction is used to instruct a second terminal to perform a target task; the target operation instruction is related to first operation information and information to be identified of a first terminal, and the first terminal and the second terminal establish a network connection through a device identifier.

The execution module 520 is configured to trigger a second application to perform the target task based on the target operation instruction.

Optionally, the interaction apparatus further includes an address receiving module and a second instruction receiving module.

The address receiving module is configured to receive at least one piece of candidate address information, in which the at least one piece of candidate address information is related to the information to be identified and the first operation information.

The second instruction receiving module is configured to receive a second user instruction, and obtain the target operation instruction by determining the at least one piece of candidate address information based on the second user instruction.

Optionally, the second instruction receiving module includes a voice receiving module and/or an operation receiving module.

The voice receiving module is configured to receive a voice instruction from a user, select a target address from at least one candidate address, and obtain the target operation instruction, in which the target operation instruction includes the target address.

The operation receiving module is configured to receive an operation instruction input by a user through a click operation or a selection operation, determine a target address from at least one candidate address, and obtain the target operation instruction, in which the target operation instruction includes the target address.

Optionally, the interaction apparatus also includes a target address receiving module.

The target address receiving module is configured to obtain the target operation instruction by receiving a target address sent by the first terminal, in which the target operation instruction includes the target address.

Optionally, the interaction apparatus also includes an object receiving module and a second instruction receiving module.

The object receiving module is configured to receive at least one piece of candidate call object information, in which the at least one piece of candidate call object information is related to the information to be identified and the first operation information.

The second instruction receiving module is configured to receive a second user instruction and obtain the target operation instruction based on the at least one piece of candidate call object information.

Optionally, the second instruction receiving module includes a voice receiving module and/or an operation receiving module.

The voice receiving module is configured to receive a voice instruction from a user, select a target call object from at least one candidate call object, and obtain the target operation instruction, in which the target operation instruction includes the target call object.

The operation receiving module is configured to receive an operation instruction input by a user through a click operation or a selection operation, determine a target call object from at least one candidate call object, and obtain the target operation instruction, in which the target operation instruction includes the target call object.

Optionally, the interaction apparatus also includes a target object receiving module.

The target object receiving module is configured to obtain the target operation instruction by receiving a target call object sent by the first terminal, in which the target operation instruction includes the target call object.

Optionally, the interaction apparatus also includes a first result generation module or a second result generation module.

The first result generation module is configured to generate result information related to an execution progress or an execution result of the target task.

The second result generating module is configured to generate result information and sending the result information to the first terminal, in which the result information is related to an execution progress or an execution result of the target task.

It needs to be noted that the above explanations of the method embodiments are also applicable to the apparatus in the embodiment, which will not be repeated here.

In order to implement the above embodiments, this embodiment of the present invention also proposes an interaction apparatus.

FIG. 6 is a structure diagram illustrating an interaction apparatus according to an embodiment of the invention.

As shown in FIG. 6, the interaction apparatus may include a transceiver module 610, a processing module 620 and an execution module 630.

The transceiver module 610 is configured to obtain a first user instruction, in which the first user instruction includes first operation information.

The processing module 620 is configured to determine a target operation instruction based on the information to be identified and the first operation information.

The execution module 630 is configured to trigger, based on the target operation instruction, a second application of a second terminal to execute a target task, in which the first terminal and the second terminal establish a network connection through a device identifier.

Optionally, the processing module includes a matching module.

The matching module is configured to obtain a matching result by inputting the first operation information and the information to be identified as input parameters into a predetermined model, in which the matching result is related to the target operation instruction.

Optionally, the interaction apparatus also includes an address obtaining module and a second instruction obtaining module.

The address obtaining module is configured to output at least one piece of candidate address information via the predetermined model, in which the at least one piece of candidate address information is related to the information to be identified and the first operation information.

The second instruction obtaining module is configured to receive a second user instruction and obtain the target operation instruction by determining the at least one piece of candidate address information based on the second user instruction.

Optionally, the second instruction obtaining module includes a voice obtaining module and/or an operation obtaining module.

The voice obtaining module is configured to receive a voice instruction from a user, select a target address from at least one candidate address, and obtain the target operation instruction, in which the target operation instruction includes the target address.

The operation obtaining module is configured to receive an operation instruction input by a user through a click operation or a selection operation, determine a target address from at least one candidate address, and obtain the target operation instruction, in which the target operation instruction includes the target address.

Optionally, the interaction apparatus also include an object obtaining module and a second instruction obtaining module.

The object obtaining module is configured to output at least one piece of candidate call object information via the predetermined model, in which the at least one piece of candidate call object information is related to the information to be identified and the first operation information.

The second instruction obtaining module is configured to receive a second user instruction, and obtain the target operation instruction by determining the at least one piece of candidate call object information based on the second user instruction.

Optionally, the second instruction obtaining module includes a voice receiving module and an operation receiving module.

The voice receiving module is configured to receive a voice instruction from a user, select a target call object from at least one candidate call object, and obtain the target operation instruction, in which the target operation instruction includes the target call object.

The operation receiving module is configured to receive an operation instruction input by a user through a click operation or a selection operation, determine a target call object from at least one candidate call object, and obtain the target operation instruction, in which the target operation instruction includes the target call object.

Optionally, the predetermined model is a multimodal large language model obtained by training with training data containing information to be identified and operation information.

Optionally, the interaction apparatus also includes a wake-up module and an instruction collection module.

The wake-up module is configured to obtain a first wake-up instruction, in which the first wake-up instruction is triggered by an operation on the first terminal.

The instruction collection module is configured to in response to the first wake-up instruction, obtain the first user instruction by collecting input information from a user.

Optionally, the transceiver module 610 includes a to-be-identified information obtaining module.

The to-be-identified information obtaining module is configured to obtain image data or text data in the first terminal as the information to be identified.

Optionally, the to-be-identified information obtaining module includes a first obtaining submodule, a second obtaining submodule, and/or a third obtaining submodule.

The first obtaining submodule is configured to obtain the information to be identified by capturing an image displayed on the first terminal.

The second obtaining submodule is configured to obtain an area image specified by a user in the first terminal as the information to be identified.

The third obtaining submodule is configured to obtain an image captured by the first terminal as the information to be identified.

It needs to be noted that the above explanations of the method embodiments are also applicable to the apparatus in the embodiment, which will not be repeated here.

In order to implement the above embodiments, the present invention also proposes a non-transitory computer-readable storage medium on which a computer program is stored. When the computer program is executed by a processor, the methods as described in the above method embodiments are implemented.

In order to implement the above embodiments, the present invention also proposes a computer program product on which a computer program is stored. When the computer program is executed by a processor, the methods as described in the above method embodiments are implemented.

In order to implement the above embodiments, the present invention also proposes an electronic device, including a memory, a processor, and a computer program stored in the memory and executable on the processor. When the computer program is executed by a processor, the methods as described in the above method embodiments are implemented.

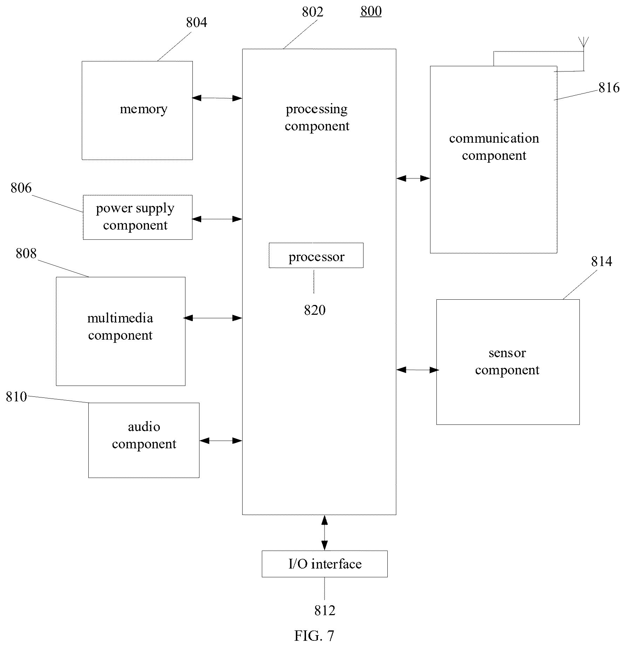

FIG. 7 is a block diagram of an electronic device according to an embodiment of the present invention. For example, the electronic device 800 may be a mobile phone, a computer, a digital broadcasting terminal, a messaging device, a game console, a tablet device, a medical device, a fitness device, a personal digital assistant, etc.

Referring to FIG. 7, the electronic device 800 may include one or more of the following components: a processing component 802, a memory 804, a power component 806, a multimedia component 808, an audio component 810, an input/output (I/O) interface 812, a sensor component 814 and a communication component 816.

The processing component 802 generally controls the overall operations of the electronic device 800, such as the operations associated with display, telephone calls, data communications, camera operations, and recording operations. The processing component 802 may include one or more processors 820 to execute instructions to complete all or part of the steps of the aforementioned method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support the operation of the electronic device 800. Examples of these data include instructions for any application or method operating on the electronic device 800, contact data, phone book data, messages, pictures, videos, etc. The memory 804 may be implemented by any type of volatile or non-volatile storage devices or their combination, such as a static random access memory (SRAM), an erasable Programmable read-only memory (EPROM), a programmable read-only memory (PROM), a read-only memory (ROM), a magnetic memory, a flash memory, a magnetic disk or an optical disk.

The power component 806 provides power to various components of the electronic device 800. The power component 806 may include a power management system, one or more power supplies, and other components associated with generating, managing, and distributing power for the electronic device 800.

The multimedia component 808 includes a screen that provides an output interface between the electronic device 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touching, sliding, and gestures on the touch panel. The touch sensor may not only sense the boundary of a touch or slide action, but also detect the duration and pressure related to the touch or slide operation. In some embodiments, the multimedia component 808 includes a front camera and/or a rear camera. When the electronic device 800 is in an operation mode, such as a shooting mode or a video mode, the front camera and/or the rear camera may receive external multimedia data. Each of a front camera and a rear camera may be a fixed optical lens system or have focal length and optical zoom capabilities.

The audio component 810 is configured to output and/or input audio signals. For example, the audio component 810 includes a microphone (MIC). When the electronic device 800 is in an operation mode, such as a call mode, a recording mode, and a voice recognition mode, the microphone is configured to receive external audio signals. The received audio signal may be further stored in the memory 804 or transmitted via the communication component 816. In some embodiments, the audio component 810 further includes a speaker for outputting audio signals.

The I/O interface 812 provides an interface between the processing component 802 and a peripheral interface module. The peripheral interface module may be a keyboard, a click wheel, a button, and the like. These buttons may include but are not limited to: a home button, a volume button, a start button, and a lock button.

The sensor component 814 includes one or more sensors for providing the electronic device 800 with various aspects of status assessment. For example, the sensor component 814 may detect an on/off status of the electronic device 800 and the relative positioning of components. For example, the component is a display and a keypad of the electronic device 800. The sensor component 814 may also detect a position change of the electronic device 800 or a component of the electronic device 800. The presence or absence of a contact between the user and the electronic device 800, the orientation or acceleration/deceleration of the electronic device 800, and temperature change of the electronic device 800. The sensor component 814 may include a proximity sensor configured to detect the presence of nearby objects when there is no physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate wired or wireless communication between the electronic device 800 and other devices. The electronic device 800 may access a wireless network based on a communication standard, such as WiFi, 4G, or 5G, or a combination of them. In an example embodiment, the communication component 816 receives a broadcast signal or broadcast related information from an external broadcast management system via a broadcast channel. In an example embodiment, the communication component 816 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an example embodiment, the electronic device 800 may be implemented by one or more application specific integrated circuits (ASIC), digital signal processors (DSP), digital signal processing devices (DSPD), programmable logic devices (PLD), field programmable implemented by a gate array (FPGA), controllers, microcontrollers, microprocessors, or other electronic components, which are configured to implement the above method.

In an example embodiment, there is also provided a non-transitory computer-readable storage medium including instructions, such as the memory 804 including instructions, which may be executed by the processor 820 of the electronic device 800 to complete the aforementioned method. For example, the non-transitory computer-readable storage medium may be a ROM, a random access memory (RAM), a CD-ROM, a magnetic tape, a floppy disk, an optical data storage device, etc.

In the description of this specification, reference to the terms "one embodiment", "some embodiments", "example", "specific example", or "some examples" means that specific features, structures, materials or characteristics described in conjunction with the embodiments or example are included in at least one embodiment or example of the invention. In this specification, the schematic expressions of the above terms do not necessarily refer to the same embodiment or example. Furthermore, the specific features, structures, materials, or characteristics described may be combined in any suitable manner in any one or more embodiments or examples. Furthermore, those skilled in the art may integrate and combine different embodiments or examples and features of different embodiments or examples described in this specification without mutual contradiction.

In addition, the terms "first" and "second" are used for purposes of description only and should not be understood as indicating or implying relative importance or implicitly indicating the quantity of the indicated technical features. Therefore, features defined by "first" or "second" may explicitly or implicitly indicate that at least one of the features are included. In the description of the invention, "a plurality of" means at least two, for example, two, three, etc., unless otherwise clearly defined.

Any process or method description in a flowchart or otherwise described herein may be understood to represent a module, segment or portion of codes including one or more executable instructions for implementing the steps of a custom logical function or process, and the scope of the preferred embodiments of the present invention includes alternative implementations in which functions may be performed out of the order shown or discussed, including performing functions in a substantially simultaneous manner or in a reverse order depending on the functions involved, which should be understood by those skilled in the art to which the embodiments of the present invention belong.

The logic and/or steps represented in the flowchart or otherwise described herein may be considered, for example, as an ordered list of executable instructions for implementing logical functions, and may be embodied in any computer-readable medium for use by, or in conjunction with, an instruction execution system/apparatus/device (such as a computer-based system, a system including a processor, or other system that may fetch and execute instructions from the instruction execution system/apparatus/device). For the purposes of this specification, a "computer-readable medium" may be any device that may contain, store, communicate, propagate, or transport the program for use by the instruction execution system/apparatus/device, or in connection with such instruction execution system/apparatus/device. More specific examples (a non-exhaustive list) of computer-readable media include: an electrical connection component (electronic device) having one or more wires, a portable computer disk cartridge (magnetic device), a random access memory (RAM), a read-only memory (ROM), an erasable and programmable read-only memory (EPROM or a flash memory), a fiber optic device, and a portable compact disc read-only memory (CDROM). Furthermore, the computer-readable medium may even be paper or other suitable medium on which the program is printed, since the program may be obtained electronically, for example, by optically scanning the paper or other medium and then editing, interpreting or processing it in another suitable manner if necessary, and then storing it in a computer memory.

It should be understood that various parts of the present invention may be implemented by hardware, software, firmware or a combination of them. In the above embodiments, a plurality of steps or methods may be implemented by software or firmware stored in a memory and executed by a suitable instruction execution system. For example, if implemented in hardware, as in another embodiment, it may be implemented using any one of following technologies known in the art or a combination of them: a discrete logic circuit having a logic gate circuit for implementing logical functions on data signals, a dedicated integrated circuit having a suitable combination of logic gate circuits, a programmable gate array (PGA), a field programmable gate array (FPGA), etc.

Those skilled in the art may understand that all or part of the steps in the methods of the above embodiments may be completed by instructing related hardware through a program, and the program may be stored in a computer-readable storage medium. When the program is executed, it includes one or a combination of the steps of the method embodiments.

In addition, each functional unit in each embodiment of the present invention may be integrated into one processing module, or each unit may exist physically separately, or two or more units may be integrated into one module. The above integrated modules may be implemented in the form of hardware or software functional modules. If the integrated module is implemented in the form of a software function module and sold or used as an independent product, it may also be stored in a computer-readable storage medium.

The storage medium mentioned above may be a read-only memory, a magnetic disk or an optical disk, etc. Although the embodiments of the present invention have been shown and described above, it may be understood that the above embodiments are exemplary and cannot be understood as limitations on the invention.

## Claims

1. An interaction method, performed by a first terminal, the interaction method comprising:
obtaining (101)) a first user instruction, wherein the first user instruction comprises first operation information;
obtaining (102) information to be identified of a first application in the first terminal; and
determining a target operation instruction associated with the information to be identified and the first operation information, wherein the target operation instruction is used to trigger a second application of a second terminal to execute a target task, and the first terminal and the second terminal establish a network connection through a device identifier.

2. The method according to claim 1, further comprising:
determining, based on the information to be identified and the first operation information, the target operation instruction.

3. The method according to claim 2, wherein determining, based on the information to be identified and the first operation information, the target operation instruction comprises:
obtaining a matching result by inputting the first operation information and the information to be identified as input parameters into a predetermined model, wherein the matching result is related to the target operation instruction;
optionally wherein the predetermined model is a multimodal large language model obtained by training with training data containing historical information to be identified and historical operation information.

4. The method according to claim 2 or 3, further comprising:
receiving at least one piece of candidate address information, wherein the at least one piece of candidate address information is related to the information to be identified and the first operation information; and
receiving a second user instruction, and obtaining the target operation instruction based on the at least one piece of candidate address information;
or
receiving at least one piece of candidate call object information, wherein the at least one piece of candidate call object information is related to the information to be identified and the first operation information; and
receiving a second user instruction, and obtaining the target operation instruction based on the at least one piece of candidate call object information.

5. The method according to claim 4,
wherein receiving the second user instruction and obtaining the target operation instruction based on the at least one piece of candidate address information comprises at least one of:
receiving a voice instruction from a user, selecting a target address from at least one candidate address, and obtaining the target operation instruction, wherein the target operation instruction comprises the target address; or
receiving an operation instruction input by a user through a click operation or a selection operation, determining a target address from at least one candidate address, and obtaining the target operation instruction, wherein the target operation instruction comprises the target address;
or
wherein the receiving the second user instruction and obtaining the target operation instruction based on the at least one piece of candidate call object information comprises at least one of:
receiving a voice instruction from a user, selecting a target call object from at least one candidate call object, and obtaining the target operation instruction, wherein the target operation instruction comprises the target call object; or
receiving an operation instruction input by a user through a click operation or a selection operation, determining a target call object from at least one candidate call object, and obtaining the target operation instruction, wherein the target operation instruction comprises the target call object.

6. The method according to claim 1, further comprising at least one of:
obtaining a first wake-up instruction, wherein the first wake-up instruction is triggered by an operation on the first terminal; and in response to the first wake-up instruction, obtaining the first user instruction by collecting input information from a user; or
receiving result information sent by the second terminal, wherein the result information is related to an execution progress or an execution result of the target task.

7. The method according to claim 1, wherein obtaining the information to be identified of the first application in the first terminal comprises:
obtaining image data or text data in the first terminal as the information to be identified;
optionally wherein obtaining the image data or text data in the first terminal as the information to be identified comprises at least one of:
obtaining the information to be identified by capturing an image displayed on the first terminal;
obtaining an area image specified by a user in the first terminal as the information to be identified; or
obtaining an image captured by the first terminal as the information to be identified.

8. An interaction method, performed by a second terminal, the interaction method comprising:
receiving (201) a target operation instruction, wherein the target operation instruction is used to instruct the second terminal to execute a target task; the target operation instruction is related to first operation information and information to be identified of a first terminal, and the first terminal and the second terminal establish a network connection through a device identifier; and
triggering (202) a second application to execute the target task based on the target operation instruction.

9. The method according to claim 8, further comprising:
receiving at least one piece of candidate address information, wherein the at least one piece of candidate address information is related to the information to be identified and the first operation information; and
receiving a second user instruction, and obtaining the target operation instruction by determining the at least one piece of candidate address information based on the second user instruction;
or
receiving at least one piece of candidate call object information, wherein the at least one piece of candidate call object information is related to the information to be identified and the first operation information; and
receiving a second user instruction, and obtaining the target operation instruction by determining the at least one piece of candidate call object information based on the second user instruction.

10. The method according to claim 9,
wherein receiving the second user instruction, and obtaining the target operation instruction by determining the at least one piece of candidate address information based on the second user instruction comprises at least one of:
receiving a voice instruction from a user, selecting a target address from at least one candidate address, and obtaining the target operation instruction, wherein the target operation instruction includes the target address; or
receiving an operation instruction input by a user through a click operation or a selection operation, determining a target address from at least one candidate address, and obtaining the target operation instruction, wherein the target operation instruction comprises the target address;
or
wherein receiving the second user instruction, and obtaining the target operation instruction by determining the at least one piece of candidate call object information based on the second user instruction comprises at least one of:
receiving a voice instruction from a user, selecting a target call object from at least one candidate call object, and obtaining the target operation instruction, wherein the target operation instruction comprises the target call object; or
receiving an operation instruction input by a user through a click operation or a selection operation, determining a target call object from at least one candidate call object, and obtaining the target operation instruction, wherein the target operation instruction comprises the target call object.

11. The method according to claim 8, further comprising one of:
obtaining the target operation instruction by receiving a target address sent by the first terminal, wherein the target operation instruction comprises the target address; or
obtaining the target operation instruction by receiving a target call object sent by the first terminal, wherein the target operation instruction comprises the target call object.

12. The method according to claim 8, further comprising:
generating result information related to an execution progress or an execution result of the target task; or
generating result information and sending the result information to the first terminal, wherein the result information is related to an execution progress or an execution result of the target task.

13. A first terminal, comprising at least one processor coupled to a memory and configured to execute the method according to any one of claims 1 to 7.

14. A second terminal, comprising at least one processor coupled to a memory and configured to execute the method according to any one of claims 8 to 12.

15. A system comprising a first terminal and a second terminal, wherein
the first terminal is configured to execute the method according to any one of claims 1 to 7; or
the second terminal is configured to execute the method according to any one of claims 8 to 12.
